# EUROPÄISCHE PATENTANMELDUNG

(11) **EP 4 424 427 A1**
(43) Veröffentlichungstag der Anmeldung: **04.09.2024**
(21) Anmeldenummer: 23159957.2
(22) Anmeldetag: 03.03.2023
(51) Int. Cl.: B05B 15/40, B05C 5/02, B05C 11/10, B05C 5/00

(54) **AUFTRAGSSYSTEM UMFASSEND EIN ANSCHLUSSSTÜCK MIT DARIN ANGEORDNETEM FILTEREINSATZ SOWIE HEIZSCHLAUCH MIT EINEM SOLCHEN ANSCHLUSSSTÜCK**

(71) Anmelder: Robatech AG, 5630 Muri (CH)
(72) Erfinder: Hürlimann, Michael, 5620 Bremgarten (CH); Hofer, Claudio, 6332 Hagendorn (CH); Knecht, Stephan, 5712 Beinwil am See (CH)
(74) Vertreter: Franke, Markus

(57) **Zusammenfassung**

Die Erfindung betrifft ein Auftragssystem zum Auftragen eines fließfähigen Mediums, insbesondere eines Schmelzklebstoffs, auf ein Substrat. Ferner betrifft die Erfindung einen Heizschlauch zum Zuführen von einem fließfähigen Medium zu einer Auftragseinrichtung zum Auftragen des fließfähigen Mediums auf ein Substrat.

Bei dem Auftragssystem (1) sind die Auftragseinrichtung (2) und der Heizschlauch (8) über ein Anschlussstück (9) lösbar miteinander gekoppelt, wobei das Anschlussstück (9) einen Aufnahmeabschnitt für einen Filtereinsatz (11) aufweist.

## Beschreibung

Die Erfindung betrifft ein Auftragssystem zum Auftragen eines fließfähigen Mediums, insbesondere eines Schmelzklebstoffs, auf ein Substrat. Ferner betrifft die Erfindung einen Heizschlauch zum Zuführen von einem fließfähigen Medium zu einer Auftragseinrichtung zum Auftragen des fließfähigen Mediums auf ein Substrat.

In verschiedensten Industrien werden wärmeschmelzende fließfähige Medien eingesetzt, beispielsweise Schmelzklebstoffe, um Teile miteinander zu verbinden. Schmelzklebstoffe werden beispielsweise bei der Herstellung von Verpackungsmitteln, wie beispielsweise Faltschachteln, Trays oder auch in der grafischen Industrie, der Bauindustrie und Holzindustrie sowie für die Herstellung von Matratzen eingesetzt. Derartige fließfähige Medien müssen in der Regel vor dem Verarbeiten durch Einwirken von Wärme von einem festen Zustand in einen flüssigen Zustand bzw. pastösen Zustand überführt werden. Über einen heizbaren Heizschlauch wird dann das verflüssigte fließfähige Medium einer Auftragseinrichtung zum Auftragen des fließfähigen Mediums zugeführt. Der Heizschlauch dient somit als beheizter und flexibler Transportweg für das fließfähige Medium. Bei der Auftragseinrichtung kann es sich beispielsweise um eine Handpistole, einen Auftragskopf, insbesondere einen mit einem Dosierventil versehenen Auftragskopf, handeln. In der Regel ist diese Auftragseinrichtung beheizbar, um das fließfähige Medium auf einer zur Verarbeitung notwendigen Temperatur bzw. in einem bestimmten Temperaturbereich zu halten.

Um Verschmutzungen und damit Funktionsbeeinträchtigungen der Auftragseinrichtung zu vermeiden, sind im Bereich der Auftragseinrichtung üblicherweise Filtereinrichtungen vorgesehen. Diese Filtereinrichtungen weisen meist einen Filterkorb auf, wobei an dem Filterkorb ein Filtergewebe, in der Regel in Form eines Metallgewebes, angeordnet ist, wobei der Filterkorb bzw. das Filtergewebe von radial außen nach radial innen durchströmt wird. Etwaiger in dem fließfähigen Medium vorhandener Schmutz lagert sich dann außen an dem Filtergewebe ab. Bei einem in der Auftragseinrichtung angeordneten Filter besteht die Problematik, dass bei einem Austauschen des Filters ein Teil von dem gefilterten Schmutz in dem Aufnahmeraum für den Filter verbleibt. Beim Einsetzen eines neuen Filters besteht dann die Gefahr, dass ein Teil des in der Auftragseinrichtung verbliebenen Schmutzes in einen Bereich für gefiltertes fließfähiges Medium gelangt. Dadurch kann es zu Funktionsbeeinträchtigungen der Auftragseinrichtung und/oder zu einer Verunreinigung des ausgegebenen fließfähigen Mediums kommen. Besonders problematisch ist dies bei einem stromabwärts von dem Filter angeordneten Dosierventil und/oder einer stromabwärts von dem Filter angeordneten Düse der Auftragseinrichtung.

Eine Vorrichtung zum Auftragen von erwärmten Klebstoff bzw. Heißleim mit mindestens einem Auftragskopf und einem in dem Auftragskopf integrierten Filter ist beispielsweise aus der DE 20 2008 007 386 U1 bekannt.

Es sind aber auch Auftragssysteme zum Auftragen eines fließfähigen Mediums auf ein Substrat bekannt, bei denen das Auftragssystem einen Heizschlauch zum Zuführen des fließfähigen Mediums zu einer Auftragseinrichtung aufweist, wobei eine Filtereinrichtung innerhalb des Heizschlauchs angeordnet ist. Ein solches Auftragssystem wird beispielsweise in der US 4,524,887 A beschrieben. Nachteilig bei der in der vorgenannten Druckschrift beschriebenen Gestaltung ist, dass ein Filterwechsel aufgrund der Anordnung des Filters in dem Heizschlauch und der Befestigung des Filters in dem Heizschlauch recht aufwendig ist. Zudem ist ein Wechsel des Filters nicht werkzeuglos möglich.

Aufgabe der vorliegenden Erfindung ist es, ein Auftragssystem zum Auftragen eines fließfähigen Mediums anzugeben, das die vorgenannten Nachteile überwindet. Ferner ist es Aufgabe der Erfindung, einen Heizschlauch anzugeben, der die vorgenannten Nachteile überwindet.

Gelöst wird diese Aufgabe durch ein Auftragssystem, das die Merkmale des Patentanspruchs 1 aufweist. Gelöst wird diese Aufgabe ferner durch einen Heizschlauch, der die Merkmale des Patentanspruchs 15 aufweist.

Das erfindungsgemäße Auftragssystem dient zum Auftragen eines fließfähigen Mediums auf ein Substrat. Bei dem fließfähigen Medium handelt es sich insbesondere um einen aufgeschmolzenen Schmelzklebstoff. Das Auftragssystem weist eine beheizbare Auftragseinrichtung zum Auftragen des fließfähigen Mediums auf das Substrat auf. Ferner weist das Auftragssystem einen Heizschlauch zum Zuführen des fließfähigen Mediums zu der Auftragseinrichtung auf, wobei der Heizschlauch eine Schlauchseele zum Durchleiten des fließfähigen Mediums aufweist. Ferner umfasst das Auftragssystem einen Filtereinsatz zum Filtern des fließfähigen Mediums. Bei der Auftragseinrichtung handelt es sich insbesondere um einen Auftragskopf, vorzugsweise mit einem pneumatisch oder elektrisch betreibbaren Dosierventil zum Ausgeben des fließfähigen Mediums aus einer Auftragsdüse des Auftragskopfs. Die Auftragseinrichtung und der Heizschlauch sind über ein Anschlussstück lösbar miteinander gekoppelt. Das Anschlussstück weist ein mit der Schlauchseele fluidverbundenes Einlassende mit einer Einlassöffnung für das fließfähige Medium, ein Auslassende mit einer Auslassöffnung und einen sich von der Einlassöffnung zu der Auslassöffnung erstreckenden Durchgangskanal für das fließfähige Medium auf. An seinem Auslassende weist das Anschlussstück einen sich geradlinig entlang einer axialen Richtung erstreckenden, mit der Auftragseinrichtung lösbar gekoppelten Kopplungsabschnitt auf. Der Filtereinsatz ist durch die Auslassöffnung hindurch geradlinig entlang der axialen Richtung in einen durch den Durchgangskanal gebildeten Aufnahmeabschnitt eingeschoben. Der Filtereinsatz weist eine von radial außen nach radial innen oder eine von radial innen nach radial außen durchströmbare Filterstruktur zum Filtern des fließfähigen Mediums auf. Der Filtereinsatz weist einen gegenüber der Filterstruktur nach radial außen hervorstehenden Lagerabschnitt auf, wobei der Lagerabschnitt zumindest teilweise in dem Aufnahmeabschnitt angeordnet ist, zum radialen Lagern des Filtereinsatzes in dem Aufnahmeabschnitt.

Durch diese Gestaltung ist es möglich, den Filtereinsatz bei von der Auftragseinrichtung abgetrenntem Anschlussstück in der axialen Richtung aus dem Aufnahmeabschnitt zu entnehmen bzw. von der Auslassöffnung aus in den Aufnahmeabschnitt einzuschieben. Dadurch ist ein besonders einfacher und schneller Wechsel des Filtereinsatzes, beispielsweise bei verschmutztem Filtereinsatz, möglich. Durch den Lagerabschnitt ist sichergestellt, dass der Filtereinsatz, genauer gesagt die Filterstruktur, von einer den Durchgangskanal begrenzenden Innenwand bzw. Innenseite des Anschlussstücks in der radialen Richtung beabstandet ist, um ein radiales Durchströmen der Filterstruktur von radial außen nach radial innen bzw. radial innen nach radial außen über die gesamte Umfangsfläche der Filterstruktur zu ermöglichen. Durch den Lagerabschnitt wird insofern eine Zentrierung der Filterstruktur in dem Aufnahmeabschnitt erreicht.

Eine Filterstruktur, die von radial außen nach radial innen bzw. radial innen nach radial außen durchströmt wird, hat gegenüber einer Filterstruktur, die axial durchströmt wird, den Vorteil eines geringeren Strömungswiderstands und einer längeren Betriebsdauer, da bei vergleichbaren radialen Abmessungen eine axial durchströmbare Filterstruktur eine geringere Filterfläche aufweist, wodurch diese im Betrieb einen größeren Strömungswiderstand hat und rascher verstopft.

Durch die Anordnung des Filtereinsatzes in dem Durchgangskanal wird eine besonders homogene Beaufschlagung des Filters mit dem zu filternden Fluid erreicht. Dadurch werden Toträume und/oder Stauräume vermieden. Zudem kann auf einen separaten Aufnahmeraum für den Filtereinsatz verzichtet werden, wodurch eine besonders kompakte Gestaltung möglich ist.

Als besonders vorteilhaft wird es angesehen, wenn der Lagerabschnitt unmittelbar an die den Durchgangskanal begrenzende Innenseite des Anschlussstücks angrenzt, wobei ein Außendurchmesser des Lagerabschnitts und ein Durchmesser des Aufnahmeabschnitts im Wesentlichen identisch sind. In diesem Zusammenhang wird es als besonders vorteilhaft angesehen, wenn der Durchmesser des Aufnahmeabschnitts und der Außendurchmesser des Lagerabschnitts derart bemessen sind, dass ein radiales Spiel zwischen dem Lagerabschnitt und der den Durchgangskanal umlaufend begrenzenden Innenseite, beispielsweise in Form eines Spiels zwischen einem Außendurchmesser des Lagerabschnitts und einem Durchmesser des Durchgangskanals im Bereich des Aufnahmeabschnitts, kleiner oder gleich einer Öffnungsgröße bzw. Maschenweite der Filterstruktur ist. Dadurch wird verhindert, dass ungefiltertes fluides Medium mit Verschmutzungen, die größer sind als eine Öffnungsgröße der Filterstruktur, den Filtereinsatz radial außen passiert und dadurch nicht über die Filterstruktur gefiltert wird und dadurch in die Auftragseinrichtung gelangt.

Es wird als besonders vorteilhaft angesehen, wenn der Lagerabschnitt dichtend mit der den Aufnahmeabschnitt umlaufend begrenzenden Innenseite des Auftragskopfs zusammenwirkt, sodass kein fließfähiges Medium den Lagerabschnitt radial außen passieren kann. Die Dichtwirkung kann durchaus durch im Zwischenbereich eingedrungenes und ggf. dort ausgehärtetes Medium begünstigt werden.

Vorzugsweise ist der Aufnahmeabschnitt durch eine zylindrische Bohrung gebildet. Dadurch kann der Aufnahmeabschnitt besonders einfach hergestellt werden.

Als besonders vorteilhaft wird es angesehen, wenn der Außendurchmesser des Lagerabschnitts und der Durchmesser des Aufnahmeabschnitts derart eng zueinander bemessen sind, dass der Filtereinsatz in dem Aufnahmeabschnitt gehalten ist. Dadurch wird vermieden, dass der Filtereinsatz bei abgetrenntem Anschlussstück, beispielsweise schwerkraftbedingt, aus dem Aufnahmeabschnitt herausfällt.

Vorzugsweise liegt zwischen dem Außendurchmesser des Lagerabschnitts und dem Durchmesser des Aufnahmeabschnitts eine Spielpassung vor. Vorzugsweise sind die Durchmesser derart bemessen, dass eine kraftschlüssige Verbindung zwischen dem Filtereinsatz und dem Aufnahmeabschnitt dadurch bewirkt ist, dass in den Zwischenraum zwischen dem Lagerabschnitt und der den Durchgangskanal im Bereich des Aufnahmeabschnitts begrenzenden Innenseite des Anschlussstücks im Betrieb fließfähiges Medium gelangt, wodurch eine zusätzliche Haftreibung zwischen den einander zugewandten Oberflächen von Lagerabschnitt und Anschlussstück erreicht wird. In der Regel wird diese Haftreibung bzw. der Kraftschluss zwar ein schwerkraftbedingtes Herausfallen des Filtereinsatzes verhindern. Allerdings wird diese Kraft nicht derart groß sein, dass der Filtereinsatz nicht mehr händisch aus dem Aufnahmeabschnitt entnommen werden kann.

In einer besonders bevorzugten Ausführungsform ist vorgesehen, dass zwischen dem Lagerabschnitt und der den Durchgangskanal begrenzenden Innenseite des Anschlussstücks keine weiteren Dichtungselemente, wie beispielsweise ein O-Ring oder Ähnliches, angeordnet sind. Dadurch werden verschleißfähige Teile eingespart und ein zuverlässiger Betrieb begünstigt.

Vorzugsweise besteht das Anschlussstück aus Metall oder aus einer Metalllegierung. Vorzugsweise besteht der Lagerabschnitt ebenfalls aus Metall oder aus einer Metalllegierung. Die Fertigung aus Metall hat den Vorteil, dass die Teile mit geringen Toleranzen gefertigt werden können, wodurch die Passgenauigkeit erhöht wird. Zudem hat Metall bzw. eine Metalllegierung geringe Verschleißerscheinungen, sodass eine hohe Langlebigkeit erreicht wird. Vorzugsweise ist das Anschlussstück einteilig ausgebildet. Vorzugsweise ist das Anschlussstück steif ausgebildet.

In einer besonders bevorzugten Ausführungsform ist vorgesehen, dass der Lagerabschnitt hohlzylindrisch ausgebildet ist, insofern einen innenliegenden Kanal für das fließfähige Medium aufweist.

Vor dem Hintergrund eines möglichst einfachen Ein- und Ausbaus des Filtereinsatzes aus dem Aufnahmeabschnitt wird es als vorteilhaft angesehen, wenn keine weiteren mechanischen Sicherungen vorgesehen sind, sondern der Filtereinsatz zwecks Montage bzw. Demontage ausschließlich von der der Ausgabeeinrichtung zuzuwendenden Auslassöffnung aus in den Aufnahmeabschnitt entlang der axialen Richtung eingeschoben werden muss bzw. herausgezogen werden muss.

In einer bevorzugten Ausführungsform ist die Auftragseinrichtung als Auftragskopf mit einem Dosierventil, insbesondere einem pneumatisch betriebenen Dosierventil, ausgebildet.

In einer bevorzugten Ausführungsform ist vorgesehen, dass der Aufnahmeabschnitt einen gegenüber dem in Richtung des Heizschlauchs angrenzenden Abschnitt des Durchgangskanals erweiterten Durchmesser aufweist. Dadurch, dass der Durchgangskanal angrenzend an den Aufnahmeabschnitt einen kleineren Durchmesser aufweist, wird ein Einschieben des Filtereinsatzes in den Durchgangskanal des Anschlussstücks begrenzt.

Der Filtereinsatz muss nicht notwendigerweise vollständig in den Aufnahmeabschnitt eingeschoben sein. Insofern ist es durchaus denkbar und bevorzugt, wenn ein Teilbereich des Filtereinsatzes in der axialen Richtung gegenüber dem Aufnahmeabschnitt in Richtung der Auftragseinrichtung hervorsteht.

Als besonders vorteilhaft wird es angesehen, wenn der Filtereinsatz einen Stützabschnitt aufweist, wobei der Filtereinsatz derart in den Aufnahmeabschnitt angeordnet ist, dass der Stützabschnitt in der axialen Richtung gegenüber dem Aufnahmeabschnitt in Richtung der Auftragseinrichtung hervorsteht, wobei sich der Stützabschnitt an einem Gegenlager der Auftragseinrichtung axial abstützt. Durch den Stützabschnitt und das Gegenlager wird verhindert, dass im Betrieb des Auftragssystems der Filtereinsatz aus dem Aufnahmeabschnitt herausgedrückt wird. Durch den Stützabschnitt und dem mit dem Stützabschnitt zusammenwirkenden Gegenlagern wird der Filtereinsatz im Betrieb des Auftragssystems in Position gehalten. Das unter Druck stehende, fließfähige Medium drückt den Filtereinsatz im Betrieb in der axialen Richtung gegen das Gegenlager.

Hinsichtlich des Stützabschnitts wird es als besonders vorteilhaft angesehen, wenn der Stützabschnitt im Betrieb umlaufend und dichtend an dem Gegenlager anliegt. Dadurch wird eine Leckage von fließfähigem Medium in diesem Bereich verhindert.

Es wird als besonders vorteilhaft angesehen, wenn der Aufnahmeabschnitt und der Lagerabschnitt zylinderförmig ausgebildet sind. Dadurch kann eine hohe Passgenauigkeit erreicht werden.

Vorzugsweise ist eine Umfangsfläche des Lagerabschnitts glatt ausgebildet, insbesondere frei von einem Gewinde. Dadurch wird das Verschieben des Lagerabschnitts in dem Aufnahmeabschnitt erleichtert.

In einer besonders bevorzugten Ausführungsform ist vorgesehen, dass der Kopplungsabschnitt in die Auftragseinrichtung einsteckbar ist zwecks Koppeln von Anschlussstück und Auftragseinrichtung. Insofern liegt vorzugsweise eine Steckkupplung, insbesondere eine Schnellkupplung, vor. Dabei wird es als vorteilhaft angesehen, wenn der Kopplungsabschnitt einen sich stufenförmig in Richtung des Heizschlauchs erweiternden Außendurchmesser und eine Einstecköffnung bzw. Anschlussbuchse der Auftragseinrichtung einen korrespondierenden, sich stufenförmig in Richtung des Heizschlauchs erweiternden Innendurchmesser aufweist. Die Einstecköffnung der Auftragseinrichtung kann beispielsweise durch eine mehrfach abgestufte Bohrung gebildet sein. Durch die abgestuften Durchmesser wird das Koppeln des Anschlussstücks mit der Auftragseinrichtung erleichtert, da durch die abgestuften Durchmesser eine Selbstzentrierung erfolgt. In diesem Zusammenhang wird es als besonders vorteilhaft angesehen, wenn zumindest ein Übergang zwischen den Stufen konisch ausgebildet ist.

Im Zusammenhang mit einer solchen Steckkupplung zwischen Anschlussstück und Auftragseinrichtung wird es als vorteilhaft angesehen, wenn das Anschlussstück über einen quer zu der Einsteckrichtung verschiebbaren Verschlussschieber axial gesichert ist. Im Betrieb steht das fließfähige Medium typischerweise unter hohem Druck, beispielweise 100 bar bis 300 bar. Durch den Verschlussschieber wird ein Herausdrücken des Anschlussstücks und somit ein Lösen der Steckkupplung aufgrund der Druckkräfte vermieden. Zudem ist das Anschlussstück dadurch gegen ein unbeabsichtigtes Entnehmen gesichert. Dabei wird es als besonders vorteilhaft angesehen, wenn das Anschlussstück an seiner Außenseite einen umlaufenden Rücksprung aufweist, und die Auftragseinrichtung an einer Einstecköffnung für das Anschlussstück an einer Innenseite einen dazu korrespondierenden Rücksprung aufweist, wobei diese beiden Rücksprünge in der eingesteckten Position des Anschlussstücks einen Aufnahmebereich für zwei Schenkel des Verschlussschiebers bilden, wobei bei eingestecktem Verschlussschieber die Schenkel ein axiales Verschieben von dem Anschlussstück gegenüber der Einstecköffnung durch einen Formschluss verhindern.

Um einen Austritt von fließfähigem Medium im Kopplungsbereich zwischen dem Anschlussstück und der Auftragseinrichtung zu verhindern, wird es als besonders vorteilhaft angesehen, wenn ein Teilbereich des Lagerabschnitts gegenüber dem Aufnahmeabschnitt in der axialen Richtung hervorsteht. Dadurch werden etwaige Toträume für das fließfähige Medium vermieden.

In einer besonders bevorzugten Ausführungsform ist vorgesehen, dass der Lagerabschnitt in einer axialen Richtung zwischen einem der Auftragseinrichtung zugewandten Ende des Filtereinsatzes und der Filterstruktur ausgebildet ist. Dadurch ist die Filterstruktur bei einem Einschieben des Filtereinsatzes in den Aufnahmeabschnitt vorlaufend zu dem Lagerabschnitt ausgebildet. Da die Filterstruktur eine geringere radiale Abmessung als der Lagerabschnitt aufweist, ist dadurch das Einschieben erleichtert, da zunächst die Filterstruktur in einfacher Art und Weise in den Aufnahmeabschnitt eingeführt werden kann, bevor der Lagerabschnitt möglichst passgenau hinsichtlich der Ausrichtung des Filtereinsatzes zu dem Aufnahmeabschnitt positioniert werden muss, um diesen dann in den Aufnahmeabschnitt einzuschieben.

In einer besonders bevorzugten Ausführungsform ist vorgesehen, dass der Filtereinsatz einen weiteren Lagerabschnitt aufweist, wobei die Filterstruktur zwischen dem einen Lagerabschnitt und dem weiteren Lagerabschnitt ausgebildet ist, wobei der weitere Lagerabschnitt gegenüber der Filterstruktur nach radial außen hervorsteht, zum radialen Lagern des Filtereinsatzes in dem Aufnahmeabschnitt. Durch den weiteren Lagerabschnitt wird ein Verkippen oder Verkanten des Filtereinsatzes, beispielweise beim Einschieben, verhindert. Zudem führt der weitere Lagerabschnitt wiederum zu einer möglichst genauen Positionierung der Filterstruktur in dem Aufnahmeabschnitt, insbesondere zu einer koaxialen Ausrichtung der Filterstruktur zu dem Aufnahmeabschnitt, wodurch ein möglichst gleichmäßiges radiales Durchströmen der Filterstruktur über die gesamte Umfangsfläche der Filterstruktur erreicht wird. Ebenso wird das Einschieben und das Herausschieben des Filtereinsatzes vereinfacht, da der weitere Lagerabschnitt eine zusätzliche Führung des Filtereinsatzes bewirkt. Vorzugsweise ist ein Außendurchmesser des weiteren Lagerabschnitts geringfügig kleiner als ein Außendurchmesser des einen Lagerabschnitts, wodurch das Einstecken und Entnehmen des Filtereinsatzes erleichtert wird. Der weitere Lagerabschnitt hat zudem den Vorteil einer zuverlässigen Zentrierung des Filtereinsatzes im Betrieb, insbesondere wenn das fließfähige Medium unter hohem Druck steht. Insbesondere wenn im Bereich des Filtereinsatzes und/oder kurz vor dem Filtereinsatz eine Umlenkung der Strömung erfolgt, ist eine weitere Lagerung, wie Sie von dem weiteren Lagerabschnitt bewirkt wird, besonders vorteilhaft, da ansonsten ein Verkippen oder Verkanten des Filtereinsatzes in dem Aufnahmeabschnitt auftreten könnte, was den Verschleiß oder gar den Betrieb negativ beeinflussen könnte.

Hinsichtlich des weiteren Lagerabschnitts wird es als besonders vorteilhaft angesehen, wenn der weitere Lagerabschnitt nach radial außen hervorstehende Stege aufweist, sodass zwischen zwei in der Umfangsrichtung benachbarten Stegen und einem sich zwischen den Stegen erstreckenden Abschnitt der den Durchgangskanal umlaufend begrenzenden Innenseite eine Durchtrittsöffnung für das zu filternde, fließfähige Medium gebildet ist. Dadurch wird ein Einströmen von zu filterndem, fließfähigem Medium in den bezüglich des Filtereinsatzes radial außen liegenden Bereich des Aufnahmeabschnitts ermöglicht, sodass dann über die gesamte Umfangsfläche der Filterstruktur das zu filternde, fließfähige Medium von radial außen nach radial innen strömen kann und dabei über die Filterstruktur gefiltert wird. Es ist aber auch grundsätzlich denkbar, dass der weitere Lagerabschnitt mit entsprechenden Durchgangsöffnungen versehen ist, um ein Einströmen des zu filternden fließfähigen Mediums in den bezüglich des Filtereinsatzes radial außen liegenden Bereich des Aufnahmeabschnitts zu ermöglichen.

Alternativ kann der Filtereinsatz aber auch derart gestaltet sein, dass das fließfähige Medium die Filterstruktur von innen nach außen durchströmt.

In einer besonders bevorzugten Ausführungsform ist vorgesehen, dass der Filtereinsatz einen Grundkörper und ein die Filterstruktur bildendes Filtergewebe aufweist. Bei dem Filtergewebe handelt es sich insbesondere um ein Drahtgeflecht. Vorzugsweise weist das Drahtgeflecht eine Drahtstärke von 0,05 mm bis 0,2 mm auf.

Das Filtergewebe ist insbesondere schlauchförmig bzw. rohrförmig ausgebildet. In diesem Zusammenhang wird es als besonders vorteilhaft angesehen, wenn der Grundkörper einen Filterabschnitt und den Lagerabschnitt aufweist, wobei der Lagerabschnitt und der Filterabschnitt in der axialen Richtung aneinander angrenzen, wobei der Grundkörper einen den Lagerabschnitt durchsetzenden, sich bis in den Filterabschnitt erstreckenden Innenkanal für gefiltertes fließfähiges Medium aufweist, wobei der Grundkörper im Bereich des Filterabschnitts in den Innenkanal mündende Durchgangsöffnungen aufweist, wobei das Filtergewebe im Bereich des Filterabschnitts angeordnet ist und den Filterabschnitt umlaufend umschließt. Ein derartiger Grundkörper wird häufig auch als Filterkorb bezeichnet. Diese Gestaltung hat den Vorteil, dass der Grundkörper bei einem notwendigen Tausch des Filtereinsatzes wiederverwendet werden kann und lediglich das Filtergewebe ausgetauscht werden muss. Zudem kann derselbe Grundkörper für unterschiedliche Filtergewebe verwendet werden, wodurch ansonsten zusätzlich notwendige Teile eingespart werden.

Als besonders vorteilhaft wird es angesehen, wenn der Innenkanal an seinem dem Lagerabschnitt abgewandten axialen Ende geschlossen ist. Dadurch wird ein Einströmen von ungefiltertem Medium in den Bereich des Innenkanals verhindert. Insofern kann in den Innenkanal lediglich über die Filterstruktur fließfähiges Medium gelangen, sodass ausschließlich gefiltertes fließfähiges Medium in den Bereich des Innenkanals gelangen kann. Bei einer Ausführungsform, bei der die Filterstruktur von radial innen nach radial außen durchströmt wird, ist der Innenkanal in Richtung des Heizschlauchs offen und in Richtung der Ausgangsöffnung geschlossen. Ungefiltertes Medium tritt dann in den Innenkanal ein und durchströmt dann die Filterstruktur nach radial außen und dann in Richtung der Ausgangsöffnung.

Es wird als besonders vorteilhaft angesehen, wenn das Filtergewebe in der axialen Richtung zwischen dem Lagerabschnitt und einem gegenüber dem Filtergewebe nach radial außen hervorstehenden Deckelelement angeordnet ist. Durch das Deckelelement und den Lagerabschnitt ist das Filtergewebe gegen ein Herunterrutschen von dem Filterabschnitt gesichert. Als besonders vorteilhaft wird es angesehen, wenn das Deckelelement lösbar mit dem Grundkörper verbunden ist. Dadurch kann das Deckelelement in einfacher Art und Weise entfernt werden, um das Filtergewebe von dem Filterabschnitt zu entfernen, beispielsweise um das Filtergewebe auszutauschen. Das Deckelelement kann durchaus durch ein separates Befestigungselement, wie beispielsweise eine Schraube, mit dem Filterabschnitt verbunden sein. Dabei ist es durchaus denkbar, dass der Filterabschnitt ein Gewinde zum Einschrauben der Befestigungsschraube aufweist.

Im Zusammenhang mit dem Deckelelement wird es als besonders vorteilhaft angesehen, wenn das Deckelelement eine geschlossene Abdeckfläche zum axialen Abdecken des Filtergewebes aufweist, wobei ein Außendurchmesser der Abdeckfläche größer ist als ein Außendurchmesser des Filtergewebes. Dadurch wird ein Unterströmen des Filtergewebes mit ungefiltertem fließfähigem Medium verhindert. In einer Weiterbildung ist vorgesehen, dass das Deckelelement einen Deckelabschnitt und einen in Richtung des Filtergewebes hervorstehenden umlaufenden Mantelabschnitt aufweist, wobei der Mantelabschnitt den an den Deckelabschnitt angrenzenden Endbereich des Filtergewebes umlaufend umschließt.

Als besonders vorteilhaft wird es angesehen, wenn der weitere Lagerabschnitt durch das Deckelelement gebildet ist. Dadurch übernimmt das Deckelelement in vorteilhafter Art und Weise eine Doppelfunktion, nämlich zum einen dient das Deckelelement zum radialen Lagern, insbesondere zum radialen Zentrieren, des Filtereinsatzes in den Aufnahmeabschnitt und zum anderen zum Halten bzw. Sichern des Filtergewebes an den Grundkörper. Ferner kann das Deckelement auch zum endseitigen Verschließen des Innenkanals des Filtereinsatzes dienen.

Insbesondere bei einer besonders engen Passung zwischen dem Lagerabschnitt und der den Durchgangskanal umlaufend begrenzenden Innenseite des Anschlussstücks, somit zwischen Außendurchmesser vom Lagerabschnitt und Durchmesser des Aufnahmeabschnitts, kann es vorkommen, dass ein hoher Kraftaufwand notwendig ist, um den Filtereinsatz aus dem Aufnahmeabschnitt herauszuziehen. Auch falls fließfähiges Medium, wie beispielsweise Klebstoff, insbesondere gealterter oder verbrannter Klebstoff, in den Zwischenraum zwischen der Innenseite des Anschlussstücks und Außenseite des Lagerabschnitts gelangt ist, kann der Filtereinsatz festsitzen. Daher ist in einer besonders bevorzugten Ausführungsform vorgesehen, dass der Filtereinsatz einen in der axialen Richtung gegenüber dem Aufnahmeabschnitt hervorstehenden Kopfabschnitt aufweist, wobei der Kopfabschnitt an einer radial außenliegenden Außenfläche eine Strukturierung aufweist. Diese Strukturierung kann beispielsweise eine Einkerbung oder gar einen umlaufenden Einstich aufweisen. Durch die Strukturierung kann der Kopfabschnitt besser ergriffen werden oder gar ein Werkzeug angesetzt werden, um den Filtereinsatz aus dem Aufnahmeabschnitt herauszuschieben. Beispielsweise kann als Werkzeug ein Schraubendreher verwendet werden. Ein derartiger Kopfabschnitt ist auch dahingehend als vorteilhaft anzusehen, dass der Filtereinsatz auch in einem heißen Zustand ausgebaut werden kann, da der Filtereinsatz im Bereich des Kopfabschnitts besonders gut mit einem Werkzeug ergriffen werden kann.

Als besonders vorteilhaft wird es angesehen, wenn das Anschlussstück ein integraler Bestandteil des Heizschlauchs ist.

In einer besonders bevorzugten Ausführungsform ist vorgesehen, dass das Anschlussstück abgewinkelt gestaltet ist. In einer bevorzugten Ausführungsform ist vorgesehen, dass der Winkel der Abwinkelung 45° beträgt. Ein 45-Grad-Winkel hat sich hinsichtlich einer möglichst flexiblen Verwendung des Anschlussstücks als vorteilhaft erwiesen.

Im Zusammenhang mit einem Anschlussstück, das einen integralen Bestandteil des Heizschlauchs bildet, wird es als besonders vorteilhaft angesehen, wenn der Aufnahmeabschnitt des Anschlussstücks und eine Achse des gestreckten Heizschlauchs einen Winkel von 45° einschließen. Ein 45-Grad-Winkel hat sich insbesondere bei einer Auftragseinrichtung mit einem Dosierventil als vorteilhaft erwiesen, bei dem eine Längsachse einer Ventilstange des Dosierventils und eine Kopplungsachse, entlang derer das Anschlussstück mit einer Anschlussbuchse bzw. Einstecköffnung der Auftragseinrichtung gekoppelt wird, ebenfalls um 45° zueinander abgewinkelt sind. Dadurch kann in einfacher Weise eine Abgangsrichtung des Heizschlauchs von 0° zu der Längsachse der Ventilstange und eine Abgangsrichtung des Heizschlauchs von 90° zu der Längsachse der Ventilstange mit denselben Komponenten verwirklicht werden. Dazu muss der Heizschlauch lediglich um 180° um die Kopplungsachse gedreht werden, um von einer Abgangsrichtung von 0° zu einer Abgangsrichtung von 90° zu wechseln.

Insbesondere bei einem abgewinkelten Anschlussstück hat es sich als vorteilhaft erwiesen, wenn der Heizschlauch im gekoppelten Zustand um eine Kopplungsachse des Anschlussstücks drehbar ist. Dadurch kann der Heizschlauch in einfacher Art und Weise in seiner Abgangsrichtung bezüglich der Auftragseinrichtung verändert werden. Als besonders vorteilhaft wird es angesehen, wenn das Anschlussstück lediglich im drucklosen Zustand des fließfähigen Mediums drehbar ist.

Es wird als besonders vorteilhaft angesehen, wenn es sich bei der Auftragseinrichtung um einen Auftragskopf handelt, wobei der Auftragskopf ein Heizelement zum Beheizen des Auftragskopfs und ein, beispielsweise pneumatisch oder elektromagnetisch, betätigbares Dosierventil zum Ausgeben des dem Auftragskopf zugeführten Mediums auf das Substrat aufweist.

Um ein Abkühlen des fließfähigen Mediums im Bereich des Filtereinsatzes zu verhindern, wird es als besonders vorteilhaft angesehen, wenn, bezogen auf eine axiale Erstreckung des Filtereinsatzes, zumindest 30%, vorzugsweise zumindest 50%, besonders bevorzugt zumindest 70 % des Filtereinsatzes innerhalb der beheizten Auftragseinrichtung angeordnet sind.

Als besonders vorteilhaft wird es angesehen, wenn die Öffnungsgröße der Filterstruktur kleiner ist als 0,2 mm, vorzugsweise kleiner ist als 0,1 mm, insbesondere kleiner ist als 0,05 mm. Bei einem Filtergewebe, beispielsweise einem Drahtgewebe, entspricht die Öffnungsgröße der Maschenweite, somit dem lichten Maß zwischen den Fäden bzw. Drähten.

Vorzugsweise weist der Aufnahmeabschnitt einen Durchmesser von 8 mm bis 20 mm auf.

Vorzugsweise weist der Lagerabschnitt einen Außendurchmesser von 8 mm bis 20 mm auf, wobei der Außendurchmesser des Lagerabschnitts kleiner oder gleich dem Durchmesser des Aufnahmeabschnitts ist.

Der erfindungsgemäße Heizschlauch dient zum Zuführen von einem fließfähigen Medium zu einer Auftragseinrichtung zum Auftragen des fließfähigen Mediums auf ein Substrat. Der Heizschlauch weist eine Schlauchseele zum Durchleiten des fließfähigen Mediums und ein Anschlussstück zum Anschließen bzw. Ankoppeln des Heizschlauchs an die Auftragseinrichtung auf. Das Anschlussstück weist ein mit der Schlauchseele fluidverbundenes Einlassende mit einer Einlassöffnung für das fließfähige Medium, ein Auslassende mit einer Auslassöffnung und einen sich von der Einlassöffnung zu der Auslassöffnung erstreckenden Durchgangskanal für das fließfähige Medium auf, wobei das Anschlussstück an seinem Auslassende einen sich geradlinig entlang einer axialen Richtung erstreckenden Kopplungsabschnitt aufweist, zum Ankoppeln des Heizschlauchs an die Auftragseinrichtung, wobei durch die Auslassöffnung ein Filtereinsatz geradlinig entlang der axialen Richtung in einen durch den Durchgangskanal gebildeten Aufnahmeabschnitt eingeschoben ist, wobei der Filtereinsatz eine von radial außen nach radial innen oder eine von radial innen nach radial außen durchströmbare Filterstruktur zum Filtern des fließfähigen Mediums aufweist und wobei der Filtereinsatz einen gegenüber der Filterstruktur nach radial außen hervorstehenden Lagerabschnitt aufweist, zum radialen Lagern des Filtereinsatzes in dem Aufnahmeabschnitt.

Der Heizschlauch ist insbesondere elektrisch beheizbar. Vorzugsweise ist der Heizschlauch dazu eingerichtet, das fließfähige Medium auf einer Betriebstemperatur von 20° C bis 250° C zu halten. Vorzugsweise ist der Heizschlauch druckstabil bis zu einem Betriebsdruck des fließfähigen Mediums von bis zu 100 bar, vorzugsweise bis zu 400 bar. Eine Schlauchlänge beträgt vorzugsweise von 0,6 m bis 10 m. Eine dem Leiten des fließfähigen Mediums dienende Innenseele des Schlauchs weist vorzugsweise einen Innendurchmesser von 6 mm bis 40 mm auf.

Die obigen Ausführungen zu den Vorteilen und Merkmalen des Auftragssystems und zu dessen vorteilhaften Ausführungsformen gelten entsprechend für den Heizschlauch und umgekehrt.

In den nachfolgenden Figuren wird die Erfindung anhand von einem Ausführungsbeispiel näher erläutert, ohne auf dieses beschränkt zu sein. Es zeigen:
- Fig. 1: ein Auftragssystem zum Auftragen eines fließfähigen Mediums, wie es aus dem Stand der Technik bekannt ist, in einer Seitenansicht,
- Fig. 2: das Auftragssystem gemäß Fig. 1 in einer Schnittansicht,
- Fig. 3: eine Ausführungsform des erfindungsgemäßen Auftragssystems umfassend einen Heizschlauch und einen Auftragskopf in einer Seitenansicht,
- Fig. 4: das Auftragssystem gemäß Fig. 3 in einer Schnittansicht,
- Fig. 5: der Heizschlauch des Auftragssystems gemäß Fig. 3 in einer Innenansicht,
- Fig. 6: ein Anschlussstück des Heizschlauchs gemäß Fig. 5 mit einem darin eingesetztem Filtereinsatz in einer perspektivischen Darstellung,
- Fig. 7: die Anordnung gemäß Fig. 6 in einer Schnittdarstellung,
- Fig. 8: einen Teilbereich der Anordnung gemäß der Linie VIII in Fig. 7,
- Fig. 9: das Anschlussstück ohne Filtereinsatz in einer Schnittdarstellung,
- Fig. 10: der Auftragskopf des Auftragssystems in einem Anschlussbereich des Anschlussstücks mit eingestecktem Anschlussstück in einer Schnittdarstellung,
- Fig. 11: der Anschlussbereich gemäß Fig. 10 ohne Anschlussstück in einer Schnittdarstellung,
- Fig. 12: der Filtereinsatz in einer perspektivischen Darstellung,
- Fig. 13: ein Grundkörper des Filtereinsatzes gemäß Fig. 12 in einer perspektivischen Darstellung,
- Fig. 14: ein Filtergewebe des Filtereinsatzes gemäß Fig. 12 in einer perspektivischen Darstellung,
- Fig. 15: ein Deckelelement des Filtereinsatzes gemäß Fig. 12 in einer perspektivischen Darstellung,
- Fig. 16: der Filtereinsatz in einer Schnittdarstellung.

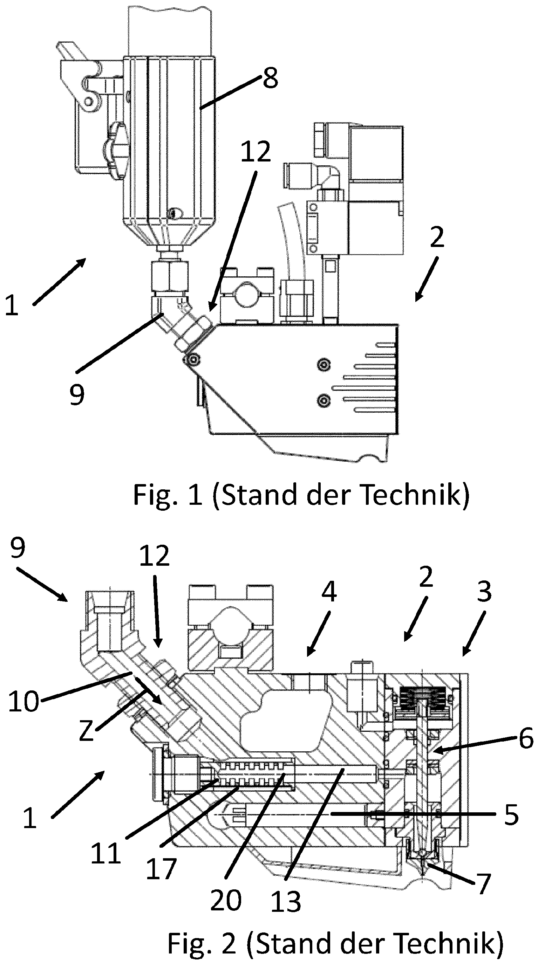

Die Fig. 1 und 2 zeigen ein Auftragssystem 1 zum Auftragen eines fließfähigen Mediums auf ein Substrat, wie es aus dem Stand der Technik bekannt ist. Das Auftragssystem 1 weist einen beheizbaren Auftragskopf 2 zum Auftragen des aufgeschmolzenen Klebstoffs auf ein Substrat auf. Der Auftragskopf 2 weist ein Spritzelement 3 und ein Heizteil 4 auf. In dem Heizteil 4 ist ein Heizelement 5 in Form einer Heizpatrone angeordnet. Das Heizelement 5 dient dem elektrischen Heizen des Auftragskopfs 2, um den verflüssigten Klebstoff in dem richtigen Temperaturbereich zu halten. In dem Spritzelement 3 ist ein Dosierventil 6 angeordnet, das pneumatisch betätigbar ist. Über das Dosierventil 6 wird eine Durchgangsöffnung einer Auftragsdüse 7 geöffnet und verschlossen. Das Auftragssystem 1 umfasst ferner einen Heizschlauch 8, wobei der Heizschlauch 8 über ein Anschlussstück 9 mit dem Auftragskopf 2 verbunden ist. Das Anschlussstück 9 ist über eine außenliegende, somit von außen zugängliche, Schraubverbindung 12 mit dem Auftragskopf 2 verbunden. Der Auftragskopf 2 weist eine Bohrung auf, in dem ein Filtereinsatz 11 gelagert ist. Das durch den Durchgangskanal 10 in den Auftragskopf 2 einströmende fließfähige Medium wird über einen schräg in das Filtergehäuse mündenden Verbindungskanal in das Filtergehäuse geleitet. Dort strömt es von radial außen an eine Filterstruktur, vorliegend ein Filtergewebe 17, und durchströmt das Filtergewebe 17 nach radial innen in einen Innenkanal 20 des Filtereinsatzes 11. Der Innenkanal 20 mündet in einen Zuführkanal 13 des Heizteils 4, der wiederum in das Dosierventil 3 mündet. Nachteilig bei dieser Gestaltung ist, dass das Filtergewebe 17 schräg angeströmt wird, wodurch das Filtergewebe 17 nicht homogen belastet wird. Zudem besteht die Problematik, dass bei einem Austauschen des Filtereinsatzes 11 etwaige Verschmutzungen in den Zuführkanal 13 gelangen können, wodurch das Dosierventil 6 in seiner Funktion beeinträchtigt werden könnte und/oder der ausgegebene Klebstoff Verunreinigungen aufweisen könnte.

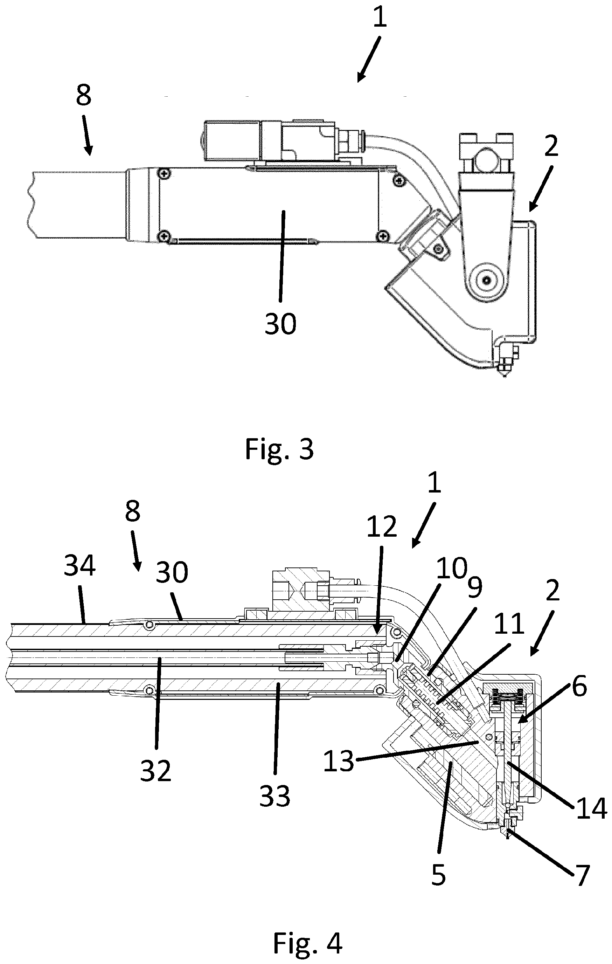

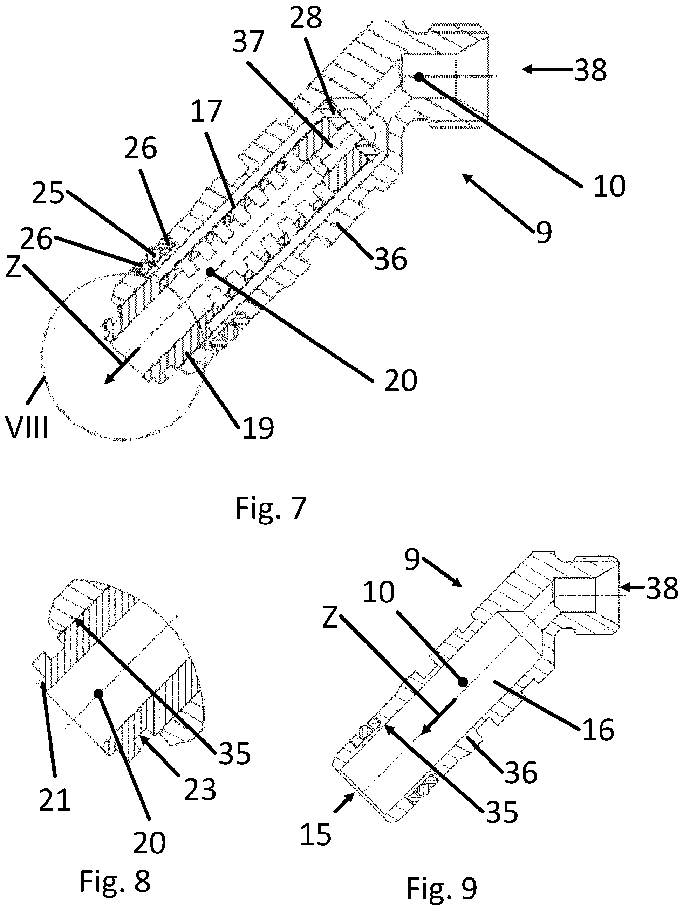

Die Fig. 3 und 4 zeigen ein erfindungsgemäßes Auftragssystem 1. Das Auftragssystem 1 weist wiederum einen Auftragskopf 2 und einen mit dem Auftragskopf 2 verbundenen Heizschlauch 8 auf. Der Auftragskopf 2 weist einen einteilig ausgebildeten Basiskörper aus Aluminium auf, in dem ein Dosierventil 6 und ein Heizelement 5 untergebracht sind. Der Basiskörper des Auftragskopfs 2 weist einen als Bohrung ausgebildeten Zuführkanal 13 auf, der vorliegend unter einem Winkel von 45° zu einer Hubrichtung einer Kolbenstange 14 des Dosierventils 6 in das Dosierventil 6 mündet. Das steife, einteilig ausgebildete Anschlussstück 9 ist ebenfalls gewinkelt ausgebildet und weist ein Einlassende mit einer Einlassöffnung 38 für den Klebstoff, ein zu dem Einlassende gewinkelt ausgebildetes Auslassende mit einer Auslassöffnung 15 und einen sich von der Einlassöffnung 38 zu der Auslassöffnung 15 erstreckenden Durchgangskanal 10 zum Durchleiten des Klebstoffs durch das Anschlussstück 9 auf. Durch die Einlassöffnung 38 strömt der eine innenliegende Schlauchseele 32 des Heizschlauchs 8 durchströmende Klebstoff in den Durchgangskanal 10 des Anschlussstücks 9 ein. Das Auslassende ist mit dem Auftragskopf 2 gekoppelt, sodass aus der Auslassöffnung 38 ausströmender Klebstoff in den Auftragskopf 2 einströmt. Das Auslassende weist einen sich geradlinig entlang einer axialen Richtung Z erstreckenden Kopplungsabschnitt 36 auf, über den das Anschlussstück 9 mit dem Auftragskopf 2 gekoppelt ist. Wie insbesondere der Fig. 4 zu entnehmen ist, ist vorliegend der Filtereinsatz 11 nicht in einer in dem Auftragskopf 2 ausgebildeten Bohrung gelagert, sondern in dem Durchgangskanal 10 des Anschlussstücks 9 gelagert. Der Filtereinsatz 11 ist durch die Auslassöffnung 15 geradlinig entlang der axialen Richtung Z in den Durchgangskanal 10 eingeschoben. Der Bereich des Durchgangskanals 10, der den Filtereinsatz 11 aufnimmt, bildet somit einen Aufnahmeabschnitt 16 für den Filtereinsatz 11. Wie insbesondere der Fig. 7 zu entnehmen ist, ist der Filtereinsatz 11 von der Auslassöffnung 15 aus entlang der axialen Richtung Z aus dem Aufnahmeabschnitt 16 entnehmbar bzw. einschiebbar, wenn das Anschlussstück 9 von dem Auftragskopf 2 getrennt ist.

Der Filtereinsatz 11 weist eine von radial außen nach radial innen durchströmbare Filterstruktur zum Filtern des Klebstoffs und einen gegenüber der Filterstruktur nach radial außen hervorstehenden Lagerabschnitt 19 auf.

Wie insbesondere der Fig. 8 zu entnehmen ist, entspricht ein Außendurchmesser des Lagerabschnitts 19 einem Durchmesser des Aufnahmeabschnitts 16, sodass der Filtereinsatz 11 über das Zusammenwirken des Lagerabschnitts 19 mit der den Durchgangskanal 10 umlaufend begrenzenden Innenseite 35 des Anschlussstücks 9 radial in dem Aufnahmeabschnitt 16 gelagert ist. Ein radiales Spiel zwischen dem Außendurchmesser des Lagerabschnitts 19 und dem Durchmesser des Aufnahmeabschnitts 16 ist dabei derart gewählt, dass das radiale Spiel kleiner oder gleich einer Maschenweite bzw. einer Öffnungsgröße der Filterstruktur ist. Dadurch wird verhindert, dass Verschmutzungen durch das Spiel zwischen dem Lagerabschnitt 19 und der den Durchgangskanal 10 umlaufend begrenzenden Innenseite 35 des Anschlussstücks 9 den Filtereinsatz 11 radial außen ungefiltert passieren und in den Auftragskopf 2 gelangen.

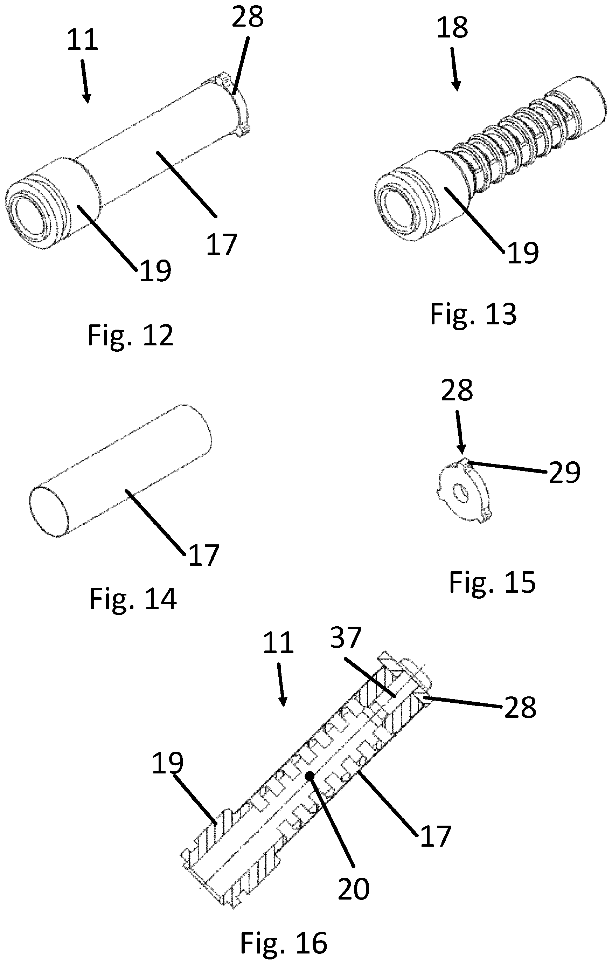

Die Filterstruktur ist vorliegend durch ein Filtergewebe 17 gebildet. Das Filtergewebe 17 als solches ist in der Fig. 14 näher dargestellt. Das Filtergewebe 17 ist vorliegend schlauchförmig ausgebildet und auf einen Grundkörper 18 des Filtereinsatzes 11 aufgeschoben. Der Grundkörper 18 weist den Lagerabschnitt 19 und einen daran angrenzenden Filterabschnitt für das Filtergewebe 17 auf. Der Grundkörper 18 weist einen sich in der axialen Richtung Z erstreckenden Innenkanal 20 auf, wobei der Innenkanal 20 an seinem dem Auftragskopf 2 zugewandten Ende offen ist und an dem gegenüberliegenden Ende geschlossen ist. Im Bereich des Filterabschnitts, in dem das Filtergewebe 17 umlaufend angeordnet ist, weist der Grundkörper 18 in den Innenkanal 20 mündende Durchgangsöffnungen auf. Der zu filternde Klebestoff durchströmt das Filtergewebe 17 von radial außen nach radial innen und gelangt über die Durchgangsöffnungen in den Innenkanal 20 und von dort in den Zuführkanal 13 des Auftragskopfs 2. Der Innenkanal 20 ist konzentrisch zu dem Aufnahmeabschnitt 16 ausgebildet und durchsetzt die Auslassöffnung 15. Der Klebstoff strömt somit nicht unmittelbar aus der Auslassöffnung 15, sondern aus dem offenen Ende des die Auslassöffnung durchsetzenden Innenkanals 20 aus und von dort unmittelbar in den Zuführkanal 13 ein.

Wie insbesondere der Fig. 12 zu entnehmen ist, weist der Filtereinsatz 11 ein Deckelelement 28 auf, wobei das Filtergewebe 17 zwischen dem Lagerabschnitt 19 und dem Deckelelement 28 gehalten ist. Das Deckelelement 28 ist über eine Schraube 37 mit dem Grundkörper 18 endseitig verschraubt. Das Deckelelement 28 deckt das Filtergewebe 17 in der axialen Richtung Z ab, wobei das Deckelelement 28 vollumfänglich gegenüber dem Filtergewebe 17 nach radial außen hervorsteht. Durch die Schraube 37 wird der Innenkanal 20 an seinem dem Heizschlauch 8 zugewandten Ende verschlossen. Durch das radial überstehende Deckelelement 28 wird verhindert, dass der entlang der axialen Richtung Z einströmende Klebstoff das Filtergewebe 17 unterwandert. Das Deckelelement 28 weist drei nach radial außen hervorstehende Stege 29 auf, deren Außendurchmesser in etwa dem Durchmesser des Aufnahmeabschnitts 16 entsprechen. Dadurch wird eine zusätzliche radiale Lagerung des Filtereinsatzes 11 erreicht, sodass der Filtereinsatz 11 auf beiden Seiten des Filtergewebes 17 radial gelagert ist. Dadurch wird ein Verkanten oder Verkippen des Filtereinsatzes 11 verhindert. Der anströmende zu filternde Klebstoff kann zwischen den Stegen 29 hindurch und somit in den kreisringförmigen Bereich zwischen einer Außenseite des Filtergewebes 17 und der den Durchgangskanal 10 umlaufend begrenzenden Innenseite 35 des Anschlussstücks 9 strömen. Von dort kann dann der Klebstoff in der radialen Richtung das Filtergewebe 17 durchströmen und auf diese Weise gefiltert in den Innenkanal 20 gelangen.

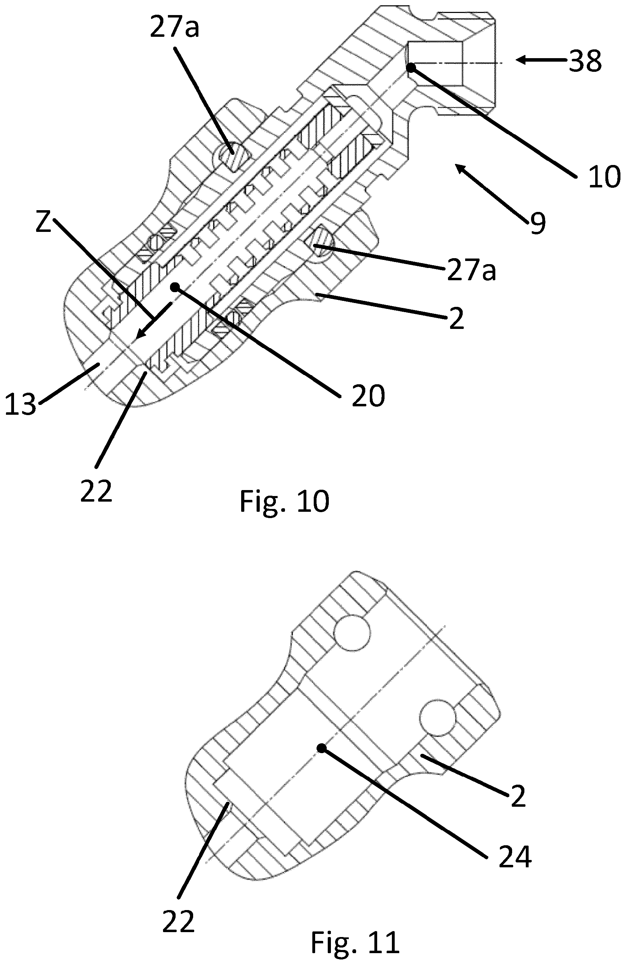

Das Anschlussstück 9 und der Filtereinsatz 11 weisen keine separate Sicherung zum Sichern des Filtereinsatzes 11 in dem Aufnahmeabschnitt 16 auf. Um zu erreichen, dass der Filtereinsatz 11 im Betrieb nicht aus dem Aufnahmeabschnitt 16 herausrutscht, weist der Filtereinsatz 11 einen Stützabschnitt 21 auf, wobei der Filtereinsatz 11 derart in dem Aufnahmeabschnitt 16 angeordnet ist, dass der Stützabschnitt 21 in der axialen Richtung Z gegenüber dem Aufnahmeabschnitt 16 in Richtung des Auftragskopfs 2 hervorsteht und sich der Stützabschnitt 21 an einem Gegenlager 22 der Einstecköffnung des Auftragskopfs 2 axial abstützt. Dies ist insbesondere der Fig. 10 zu entnehmen. Während des Betriebs des Auftragssystems 1 drückt der Klebstoffdruck den Filtereinsatz 11 entlang der axialen Richtung Z in Richtung des Auftragskopfs 2 und gegen das Gegenlager 22. Um sicherzustellen, dass nach der Trennung vom Heizschlauch 8 vom Auftragskopf 2 der Filtereinsatz 11 im Anschlussstück 9 des Heizschlauchs 8 verbleibt und nicht herausgezogen wird, ist die Stirnfläche des Stützabschnitts 21, die gegen das Gegenlager 22 der Anschlussbohrung im Auftragskopf 2 drückt, im Verhältnis zu der Kontaktfläche zwischen dem Lagerabschnitt 19 und der Innenseite 35 des Anschlussstücks 9 klein. Dadurch ist die Haftwirkung zwischen dem Stützabschnitt 21 und dem Gegenlager 22 deutlich kleiner als die Kraftwirkung zwischen dem Lagerabschnitt 19 und dem Anschlussstück 9 aufgrund von zwischen den vorgenannten Flächen eindringenden Klebstoff. Dadurch ist sichergestellt, dass der Filtereinsatz 11 nach der Trennung vom Anschlussstück 9 vom Auftragskopf 2 zuverlässig in dem Aufnahmeabschnitt 16 des Anschlussstücks 9 verbleibt. Insofern liegt ein Kraftschluss bzw. Reibschluss zwischen dem Lagerabschnitt 19 und der Innenseite 35 des Anschlussstücks 9 vor, wodurch der Filtereinsatz 11 in dem Aufnahmeabschnitt 16 gehalten ist, insbesondere wenn beim Betrieb Klebstoff in den Zwischenraum zwischen dem Lagerabschnitt 19 und der den Durchgangskanal 10 umlaufend begrenzenden Innenseite 35 des Anschlussstücks 9 gelangt.

Um ein Entnehmen des Filtereinsatzes 11 aus dem Aufnahmeabschnitt 16 zu erleichtern, weist der Filtereinsatz 11, vorliegend der Grundkörper 18, einen in der axialen Richtung Z gegenüber dem Aufnahmeabschnitt 16 hervorstehenden Kopfabschnitt auf, wobei der Stützabschnitt 21 Bestandteil des Kopfabschnitts ist und wobei der Kopfabschnitt an einer radial außenliegenden Außenfläche eine Strukturierung in Form eines umlaufenden Einstichs 23 aufweist. Dieser Einstich 23 dient dazu, dass ein festsitzender Filtereinsatz 11 mittels eines Werkzeugs, beispielsweise eines Schraubendrehers, entfernt werden kann.

Der Auftragskopf 2 weist eine Einstecköffnung 24 auf zum Einstecken des Kopplungsabschnitts 36 des Anschlussstücks 9. Um das Koppeln des Anschlussstücks 9 mit dem Auftragskopf 2 zu erleichtern, weist der Kopplungsabschnitt 36 einen sich stufenförmig in Richtung des Heizschlauchs 8, somit entgegen der axialen Richtung Z, erweiternden Außendurchmesser und die Einstecköffnung 24 einen korrespondierenden, sich stufenförmig in Richtung des Heizschlauchs 8, somit entgegen der axialen Richtung Z, erweiternden Innendurchmesser auf. Die Einstecköffnung 24 ist vorliegend in Form einer abgestuften Bohrung ausgebildet. Durch diese abgestuften Durchmesser wird beim Einstecken des Anschlussstücks 9 in die Einstecköffnung 24 eine Selbstzentrierung erreicht. Bei einem kleineren der beiden Außendurchmesser des Kopplungsabschnitts 36 ist eine statische Dichtung 25 angebracht, die verhindert, dass während des Betriebs Klebstoff zwischen der Außenfläche des Kopplungsabschnitts 36 und der Innenseite der Einstecköffnung 24 austreten kann. Diese statische Dichtung 25 besteht vorliegend aus einem O-Ring, der zwischen zwei Stützringen 26 angeordnet ist. Die Abstufungen des Kopplungsabschnitts 36 und der Einstecköffnung 24 haben zudem den Vorteil, dass diese Dichtung 25 beim Einstecken des Anschlussstücks 9 nur eine relativ geringe Distanz verschoben werden muss, was zu einem verringerten Verschleiß der Dichtung 25 führt

Um ein ungewolltes Entfernen bzw. Lösen des Anschlussstücks 9 von dem Auftragskopf 2 zu verhindern, ist das Anschlussstück 9 mittels eines bügelförmigen, quer zu der Einsteckrichtung des Anschlussstücks 9 eingesteckten Verschlussschiebers axial in der Einstecköffnung 24 gesichert. Der Verschlussschieber weist zwei Schenkel 27a, 27b auf, wobei diese beiden Schenkel 27a, 27b ein axiales Verschieben des Anschlussstücks 9 bezüglich des Auftragskopfs 2 in der axialen Richtung verhindern, wie insbesondere der Fig. 10 zu entnehmen ist.

Das Anschlussstück 9 ist vorliegend gewinkelt ausgebildet, derart, dass eine Achse des Kopplungsabschnitts 36 mit einer Achse des das Einlassende bildenden Endabschnitts einen Winkel von 45° einschließt.

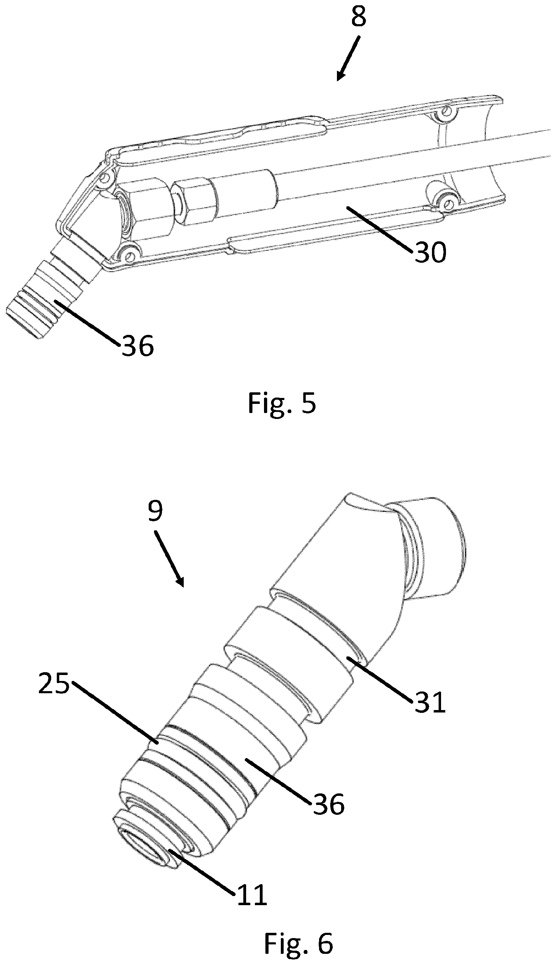

Wie den Fig. 4 und 5 zu entnehmen ist, ist das Anschlussstück 9 vorliegend integraler Bestandteil des Heizschlauchs 8. Der Heizschlauch 8 weist einen flexiblen Heizschlauchkörper auf. Der Heizschlauchkörper weist einen Hochdruckschlauch auf, wobei der Hochdruckschlauch eine innenliegende flexible Schlauchseele 32 aus Kunststoff zum Durchleiten des verflüssigten Klebstoffs und eine die Schlauchseele 32 umgebende nicht näher dargestellte Verstärkung, beispielsweise in Form eines Stahlgeflechts, aufweist, um die notwendige Druckstabilität zu erreichen. Der Hochdruckschlauch ist von nicht näher dargestellten Heizleitern umwickelt, beispielsweise in Form eines wendelförmig um den Hochdruckschlauch gewickelten Heizbands. Ferner weist der Heizschlauchkörper eine Wärmeisolationsschicht 33 aus einem Wärmedämmmaterial auf, wobei die Heizleiter zwischen der Wärmeisolationsschicht 33 und dem Hochdruckschlauch ausgebildet sind. Ferner weist der Heizschlauchkörper eine die Wärmeisolationsschicht 33 umgebende flexible Außenhülle 34 aus einem Polyamidgewebe auf. Das dem Auslassende abgewandte Einlassende des Anschlussstücks 9 ist über eine im Inneren des Heizschlauchs 8 ausgebildete, somit von außen nicht zugängliche, Schraubverbindung 12 mit der Schlauchseele 32 fluiddicht und dauerhaft verbunden, derart, dass der in der Schlauchseele 32 strömende Klebstoff durch die Einlassöffnung 38 in den Durchgangskanal 10 einströmt. Aufgrund der abgewinkelten Gestaltung des Anschlussstücks 9 ist der Kopplungsabschnitt 36 und somit die Achse des Aufnahmeabschnitts 16 bei gestrecktem Heizschlauch 8 gegenüber der Schlauchseele 32 ebenfalls um 45° abgewinkelt.

An seinem das Anschlussstück 9 aufweisenden Ende weist der Heizschlauch 8 eine außenliegende steife Endkappe 30 auf, die aus zwei Halbschalen zusammengesetzt ist. Die Endkappe 30 erstreckt sich über die Schraubverbindung 12 bis in den abgewinkelten Bereich des Anschlussstücks 9 und ist dort mit einer umlaufenden Nut 31 des Anschlussstücks 11 in Eingriff. Durch diese Gestaltung verhindert die Endkappe 30 ein Drehen des Anschlussstücks 9 gegenüber der Schlauchseele 32 und somit ein Lösen der Schraubverbindung 12 zwischen der Schlauchseele 32 und dem Anschlussstück 9.

Die Heizleiter und die Wärmeisolationsschicht 33 erstrecken sich vorliegend lediglich bis über die Schraubverbindung 12 zwischen der Schlauchseele 32 und dem Anschlussstück 9. Innerhalb von der Endkappe 30 kann eine zusätzliche Isolation im Bereich der Verschraubung vom Anschlussstück 9 mit der Schlauchseele 32 angebracht sein. Der abgewinkelte Bereich des Anschlussstücks 9, der auch den Aufnahmeabschnitt 16 für den Filtereinsatz 11 aufweist, ist hingegen nicht oder kaum isoliert und steht gegenüber der Endkappe 30 hervor. Wie insbesondere den Fig. 4 und 10 zu entnehmen ist, sind, bezogen auf eine axiale Erstreckung des Filtereinsatzes 11, zumindest 70 % des Filtereinsatzes 11 innerhalb des Auftragskopfs 2, nämlich des Basiskörpers des Auftragskopfs 2, angeordnet. Dadurch wird verhindert, dass sich der Klebstoff im Bereich des Aufnahmeabschnitts 16 bzw. im Bereich des Filtereinsatzes 11 zu stark abkühlt. Dies hat den Vorteil, dass bei einer Betriebsunterbrechung sich der in dem Anschlussbereich zwischen dem Heizschlauch 8 und dem Auftragskopf 2 befindlicher Klebstoff nur unwesentlich abkühlt, da nur ein kurzes Stück des Übertragungswegs vom Klebstoff zwischen dem Heizschlauch 8 und dem Auftragskopf 2 nicht beheizt ist und annähernd die gesamte Strecke zumindest geringfügig durch die sich annähernd bis zu dem Auftragskopf 2 erstreckende Endkappe 30 isoliert ist, wie insbesondere der Fig. 4 zu entnehmen ist.

Die in den Figuren gezeigte Gestaltung hat unter anderem folgende Vorteile:
Dadurch, dass der Aufnahmeabschnitt 16 für den Filtereinsatz 11, insofern das Filtergehäuse, in dem Anschlussstück 9 ausgebildet ist, gelangt ausschließlich gefilterter Klebstoff in den Auftragskopf 2. Dadurch werden etwaige Verunreinigungen des Auftragskopfs 2 beim Austausch des Filtereinsatzes 11 vermieden. Nach dem Entfernen des Filtereinsatzes 11 aus dem Anschlussstück 9 kann es durchaus der Fall sein, dass in dem Anschlussstück 9 bzw. dem Durchgangskanal 10 ein Teil der Verschmutzung zurückbleibt. Um diese Verschmutzung zu entfernen, können das Anschlussstück 9 und/oder der gesamte Heizschlauch 8 gespült werden. Dabei ist es durchaus denkbar, dass eine geringe Menge von neuem Klebstoff durch den Heizschlauch 8 gepumpt und anschließend entsorgt wird. Mit dem entsorgten Klebstoff wird dann gleichzeitig eine Restverschmutzung entfernt, bevor ein neuer Filtereinsatz 11 in das Anschlussstück 9 eingesetzt wird.

Die erfindungsgemäße Lösung hat zudem den Vorteil, dass ein Austausch des Filtereinsatzes 11 bzw. des Filtergewebes 17 komplett außerhalb des Auftragskopfs 2 erfolgen kann. Ein Austausch des Filtereinsatzes 11 kann somit unabhängig von dem Auftragskopf 2 erfolgen. Nachjustageaufwand am Auftragskopf 2 wird dadurch vermieden. Aufgrund des flexiblen Heizschlauchs 8 kann in einem für die Bedienperson gut zugänglichen Bereich der Filtereinsatz 11 gewechselt werden.

Da der Filtereinsatz 11 koaxial zu dem Aufnahmeabschnitt 16 angeordnet ist, wird eine besonders gleichmäßige Durchströmung des Filtergewebes 17 über die gesamte Umfangsfläche erreicht. Dadurch kann die Filterfläche des Filtergewebes 17 besser ausgenutzt und die Zeitdauer, bis ein Wechsel des Filtereinsatzes 11 bzw. des Filtergewebes 17 erforderlich ist, verlängert werden.

### Bezugszeichenliste - - - - - - - - - - - - - - - - - - - - - - - - - - - -

- 1: Auftragssystem
- 2: Auftragskopf
- 3: Spritzelement
- 4: Heizteil
- 5: Heizelement
- 6: Dosierventil
- 7: Düse
- 8: Heizschlauch
- 9: Anschlussstück
- 10: Durchgangskanal
- 11: Filtereinsatz
- 12: Schraubverbindung
- 13: Zuführkanal
- 14: Kolbenstange
- 15: Auslassöffnung
- 16: Aufnahmeabschnitt
- 17: Filtergewebe
- 18: Grundkörper
- 19: Lagerabschnitt
- 20: Kanal
- 21: Stützabschnitt
- 22: Gegenlager
- 23: Einstich
- 24: Einstecköffnung
- 25: Dichtung
- 26: Stützring
- 27a, 27b: Schenkel
- 28: Deckelelement
- 29: Steg
- 30: Endkappe
- 31: Nut
- 32: Schlauchseele
- 33: Wärmeisolationsschicht
- 34: Außenhülle
- 35: Innenseite
- 36: Kopplungsabschnitt
- 37: Schraube
- 38: Einlassöffnung

- Z: axiale Richtung

## Patentansprüche

1. Auftragssystem (1) zum Auftragen eines fließfähigen Mediums auf ein Substrat, wobei das Auftragssystem (1) eine beheizbare Auftragseinrichtung (2) zum Auftragen des fließfähigen Mediums auf das Substrat, einen Heizschlauch (8) zum Zuführen des fließfähigen Mediums zu der Auftragseinrichtung (2) und einen Filtereinsatz (11) aufweist, wobei der Heizschlauch (8) eine Schlauchseele (32) zum Durchleiten des fließfähigen Mediums aufweist, wobei die Auftragseinrichtung (2) und der Heizschlauch (8) über ein Anschlussstück (9) lösbar miteinander gekoppelt sind, wobei das Anschlussstück (9) ein mit der Schlauchseele (32) fluidverbundenes Einlassende mit einer Einlassöffnung (38) für das fließfähige Medium, ein Auslassende mit einer Auslassöffnung (15) und einen sich von der Einlassöffnung (38) zu der Auslassöffnung (15) erstreckenden Durchgangskanal (10) für das fließfähige Medium aufweist, wobei das Anschlussstück (9) an seinem Auslassende einen sich geradlinig entlang einer axialen Richtung (Z) erstreckenden, mit der Auftragseinrichtung (2) gekoppelten Kopplungsabschnitt (36) aufweist, wobei der Filtereinsatz (11) durch die Auslassöffnung (15) geradlinig entlang der axialen Richtung (Z) in einen durch den Durchgangskanal (10) gebildeten Aufnahmeabschnitt (16) eingeschoben ist, wobei der Filtereinsatz (11) eine von radial außen nach radial innen oder eine von radial innen nach radial außen durchströmbare Filterstruktur zum Filtern des fließfähigen Mediums aufweist und wobei der Filtereinsatz (11) einen gegenüber der Filterstruktur nach radial außen hervorstehenden Lagerabschnitt (19) aufweist, wobei der Lagerabschnitt (19) zumindest teilweise in dem Aufnahmeabschnitt (16) angeordnet ist, zum radialen Lagern des Filtereinsatzes (11) in dem Aufnahmeabschnitt (16).

2. Auftragssystem nach Anspruch 1, wobei der Aufnahmeabschnitt (16) einen gegenüber dem in Richtung des Heizschlauchs (8) angrenzenden Abschnitt des Durchgangskanals (10) erweiterten Durchmesser aufweist.

3. Auftragssystem nach Anspruch 1 oder 2, wobei der Filtereinsatz (11) einen Stützabschnitt (21) aufweist, wobei der Filtereinsatz (11) derart in dem Aufnahmeabschnitt (16) angeordnet ist, dass der Stützabschnitt (21) in der axialen Richtung (Z) gegenüber dem Aufnahmeabschnitt (16) in Richtung der Auftragseinrichtung (2) hervorsteht, wobei sich der Stützabschnitt (21) an einem Gegenlager der Auftragseinrichtung (2) axial abstützt.

4. Auftragssystem nach einem der Ansprüche 1 bis 3, wobei der Lagerabschnitt (19) unmittelbar an eine den Durchgangskanal (10) umlaufend begrenzende Innenseite (35) des Anschlussstücks (9) angrenzt, wobei ein radiales Spiel zwischen dem Lagerabschnitt (19) und der Innenseite (35) des Anschlussstücks (9) geringer ist als eine Öffnungsgröße der Filterstruktur.

5. Auftragssystem nach einem der Ansprüche 1 bis 4, wobei der Kopplungsabschnitt (36)in eine Einstecköffnung (24) der Auftragseinrichtung (2) eingesteckt ist, wobei der Kopplungsabschnitt (36) einen sich stufenförmig erweiternden Außendurchmesser und die Einstecköffnung (24) einen korrespondierenden, sich stufenförmig erweiternden Innendurchmesser aufweist.

6. Auftragssystem nach einem der Ansprüche 1 bis 5, wobei der Lagerabschnitt (19) in der axialen Richtung (Z) zwischen einem der Auftragseinrichtung (2) zugewandten Ende des Filtereinsatzes (11) und der Filterstruktur ausgebildet ist.

7. Auftragssystem nach einem der Ansprüche 1 bis 6, wobei der Filtereinsatz (11) einen weiteren Lagerabschnitt aufweist, wobei die Filterstruktur zwischen dem einen Lagerabschnitt (19) und dem weiteren Lagerabschnitt ausgebildet ist, wobei der weitere Lagerabschnitt gegenüber der Filterstruktur nach radial außen hervorsteht, zum radialen Lagern des Filtereinsatzes (11) in dem Aufnahmeabschnitt (16).

8. Auftragssystem nach einem der Ansprüche 1 bis 7, wobei der Filtereinsatz (11) einen Grundkörper (18) und ein die Filterstruktur bildendes Filtergewebe (17) aufweist, wobei der Grundkörper (18) einen Filterabschnitt und den Lagerabschnitt (19) aufweist, wobei der Lagerabschnitt (19) und der Filterabschnitt in der axialen Richtung (Z) aneinander angrenzen, wobei der Grundkörper (18) einen den Lagerabschnitt (19) durchsetzenden, sich bis in den Filterabschnitt erstreckenden Innenkanal (20) aufweist, wobei der Grundkörper (18) im Bereich des Filterabschnitts in den Innenkanal (20) mündende Durchgangsöffnungen aufweist, wobei das Filtergewebe (17) im Bereich des Filterabschnitts angeordnet ist und den Filterabschnitt umlaufend umschließt.

9. Auftragssystem nach Anspruch 8, wobei das Filtergewebe (17) in der axialen Richtung (Z) zwischen dem Lagerabschnitt (19) und einem gegenüber dem Filtergewebe (17) nach radial außen hervorstehenden Deckelelement (28) angeordnet ist zum Sichern des Filtergewebes (17) an dem Grundkörper (18), wobei das Deckelelement (28) lösbar mit dem Grundkörper (18) verbunden ist.

10. Auftragssystem nach Anspruch 9, wobei das Deckelelement (28) den weiteren Lagerabschnitt bildet.

11. Auftragssystem nach einem der Ansprüche 1 bis 10, wobei der Filtereinsatz (11) einen in der axialen Richtung (Z) gegenüber dem Aufnahmeabschnitt (16) hervorstehenden Kopfabschnitt aufweist, wobei der Kopfabschnitt an einer radial außen liegenden Außenfläche eine Strukturierung aufweist.

12. Auftragssystem nach einem der Ansprüche 1 bis 11, wobei das Anschlussstück (9) integraler Bestandteil des Heizschlauchs (8) ist.

13. Auftragssystem nach einem der Ansprüche 1 bis 12, wobei bezogen auf eine axiale Erstreckung des Filtereinsatzes (11) zumindest 30%, vorzugsweise zumindest 50%, besonders bevorzugt zumindest 70% des Filtereinsatzes (11) innerhalb der Auftragseinrichtung (2) angeordnet sind.

14. Auftragssystem nach einem der Ansprüche 1 bis 13, wobei es sich bei der Auftragseinrichtung (2) um einen Auftragskopf (2) handelt, wobei der Auftragskopf (2) ein Heizelement (5) zum Beheizen des Auftragskopfs (2) und ein betätigbares Dosierventil (6) zum Ausgeben des dem Auftragskopf (2) zugeführten fließfähigen Mediums auf das Substrat aufweist.

15. Heizschlauch (8) zum Zuführen von einem fließfähigen Medium zu einer Auftragseinrichtung (2) zum Auftragen des fließfähigen Mediums, wobei der Heizschlauch (8) eine Schlauchseele (32) zum Durchleiten des fließfähigen Mediums und ein Anschlussstück (9) aufweist, wobei das Anschlussstück (9) ein mit der Schlauchseele (32) fluidverbundenes Einlassende mit einer Einlassöffnung (38) für das fließfähige Medium, ein Auslassende mit einer Auslassöffnung (15) und einen sich von der Einlassöffnung (38) zu der Auslassöffnung (15) erstreckenden Durchgangskanal (10) für das fließfähige Medium aufweist, wobei das Anschlussstück (9) an seinem Auslassende einen sich geradlinig entlang einer axialen Richtung (Z) erstreckenden Kopplungsabschnitt (36) aufweist, zum Ankoppeln des Heizschlauchs (8) an die Auftragseinrichtung (2), wobei ein Filtereinsatz (11) durch die Auslassöffnung (15) geradlinig entlang der axialen Richtung (Z) in einen durch den Durchgangskanal (10) gebildeten Aufnahmeabschnitt (16) eingeschoben ist, wobei der Filtereinsatz (11) eine von radial außen nach radial innen oder eine von radial innen nach radial außen durchströmbare Filterstruktur zum Filtern des fließfähigen Mediums aufweist und wobei der Filtereinsatz (11) einen gegenüber der Filterstruktur nach radial außen hervorstehenden Lagerabschnitt (19) aufweist, wobei der Lagerabschnitt (19) zumindest teilweise in dem Aufnahmeabschnitt (16) angeordnet ist, zum radialen Lagern des Filtereinsatzes (11) in dem Aufnahmeabschnitt (16).
